(19) Europäisches Patentamt
European Patent Office
Office européen des brevets

(11) Veröffentlichungsnummer : **0 049 802**
**B1**

(12) # EUROPÄISCHE PATENTSCHRIFT

(45) Veröffentlichungstag der Patentschrift : **18.01.84**

(51) Int. Cl.³ : **C 09 B 67/54**, C 09 B 67/24

(21) Anmeldenummer : **81107715.5**

(22) Anmeldetag : **29.09.81**

(54) **Lederfärbemittel und ihre Herstellung.**

(30) Priorität : **10.10.80 DE 3038393**

(43) Veröffentlichungstag der Anmeldung : **21.04.82 Patentblatt 82/16**

(45) Bekanntmachung des Hinweises auf die Patenterteilung : **18.01.84 Patentblatt 84/03**

(84) Benannte Vertragsstaaten : **CH DE FR GB IT LI**

(56) Entgegenhaltungen : **FR-A- 2 124 359**

(73) Patentinhaber : **BAYER AG**
**Zentralbereich Patente, Marken und Lizenzen**
**D-5090 Leverkusen 1, Bayerwerk (DE)**

(72) Erfinder : **Gleinig, Harald, Dr.**
**Eichholzer Weg 100**
**D-5068 Odenthal (DE)**
Erfinder : **Mölls, Hans-Heinz, Dr.**
**Max-Beckmann-Strasse 29**
**D-5090 Leverkusen 1 (DE)**
Erfinder : **Koll, Jochen**
**Am Telegraf 40**
**D-5068 Odenthal 3 (DE)**
Erfinder : **Gottfried, Dick**
**Dr. August-Blank-Strasse 15**
**D-5090 Leverkusen 1 (DE)**
Erfinder : **Hörnle, Reinhold, Dr.**
**Hufelandstrasse 42**
**D-5000 Koeln 80 (DE)**
Erfinder : **Kunert, Friedrich, Dr.**
**Heidberg 11a**
**D-5090 Leverkusen 1 (DE)**

EP 0 049 802 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Lederfärbemittel und ihre Herstellung

Die Erfindung betrifft Lederfärbemittel, die aus den bei der Herstellung von wasserlöslichen und/oder wasserlöslich machende Gruppen enthaltenden organischen Farbstoffen anfallenden Mutterlaugen durch ein Membrantrennverfahren erhältlich sind.

Für die Färbung von textilen Substraten verschiedenster Art wie Baumwolle, Wolle, Seide usw. werden Farbstoffe eingesetzt, die speziellen Anforderungen an Echtheiten z. B. Licht- und Waschechtheiten, Substantivität, Farbton und Farbeffekt genügen müssen.

Es ist daher bei der Produktion solcher Farbstoffe dringend notwendig, sie von farbigen Nebenprodukten, welche die geforderten Eigenschaften nicht aufweisen, abzutrennen. Vorzugsweise erfolgt diese Abtrennung durch Aussalzen des gewünschten Farbstoffs und anschließende Filtration. In der stark salzhaltigen Mutterlauge befinden sich die unerwünschten Nebenprodukte in gelöster Form.

Es hat nicht an Versuchen gefehlt, die bei der Herstellung von Farbstoffen anfallenden Mutterlaugen kostengünstig aufzuarbeiten, wobei es am zweckmäßigsten wäre, die farbigen Neben- und Abfallprodukte einer sinnvollen coloristischen Verwendung zuzuführen.

Dem steht im Wege, daß diese Produkte in vielen Fällen in einer konzentrierten Salzlösung vorliegen, deren Trocknung zu sehr farbschwachen Pulvern führt. Durch Ansäuern läßt sich nur ein Teil der färbenden Nebenprodukte isolieren, ganz abgesehen davon, daß diese Methode sehr kostspielig und zudem mit einer zusätzlichen anorganischen Belastung des Abwassers verbunden ist.

Überraschenderweise wurde nun gefunden, daß wertvolle Lederfärbemittel dadurch erhältlich sind, daß man die Mutterlaugen, die beim Aussalzen bei der Herstellung von wasserlöslichen oder wasserlöslich machende Gruppen enthaltenden organischen Farbstoffen anfallen, durch ein Membrantrennverfahren aufkonzentriert und man das Konzentrat gegebenenfalls trocknet. Es werden solche Mutterlaugen eingesetzt, deren Extinktion bei einer Schichtdicke von 10 cm im Absorptionsmaximum $\geqslant$ 500 beträgt.

In das erfindungsgemäße Verfahren einsetzbare Mutterlaugen fallen z. B. beim Aussalzen von wasserlöslichen und/oder wasserlöslich machende Gruppen enthaltenden Mono-, Dis- oder Polyazo-, Formazan-, Anthrachinon-, Anthrapyridon-, Nitro-, Methin-, Styryl-, Azastyryl-, Naphthoperinon-, Chinophthalon- oder Phthalocyaninfarbstoffen an.

Bevorzugt werden Mutterlaugen eingesetzt, die beim Aussalzen von Azofarbstoffen insbesondere Polyazofarbstoffen nach einem oder mehreren der folgenden Arbeitsgänge anfallen :

Diazotierung und Kupplung,
Harnstoffbildung,
Einführung von faserreaktiven Gruppen,
Metallisierung,
Verseifung.

Des weiteren werden solche Mutterlaugen bevorzugt eingesetzt, die bei der Isolierung von Anthrachinonfarbstoffen und von metallhaltigen und metallfreien Phthalocyaninfarbstoffen nach der Sulfierung und gegebenenfalls anschließenden Einführung von faserreaktiven Gruppen anfallen.

Membrantrennverfahren sind in der Literatur beispielsweise in U. F. Franck, Dechema-Monographie 75, 1452-1458, 9/37 (1974) ausführlich als Reversosmose, Ultrafiltration, Dialyse oder Elektrodialyse beschrieben. Vorzugsweise wird die Druckpermeation, also Reversosmose und Ultrafiltration, angewendet, bei der der Durchtritt von Wasser und evtl. gelösten Stoffen durch die semipermeable Membran unter der treibenden Kraft eines den osmotischen Druck übersteigenden hydrostatischen Druckes stattfindet. Die Druckpermeation für das erfindungsgemäße Verfahren läßt sich auf allen handelsüblichen Druckpermeationsgeräten durchführen. Solche Geräte können z. B. als Platten-, Rahmen-, Rohr-, Schlauch-, Wickel-, Hohlfaser- oder Hohlfeinfasermodul ausgebildet sein.

Erfindungsgemäß verwendbare und in die vorgenannten Moduln einbaubare Membranen sind z. B. solche aus Cellulose, Cellulosedi- bzw. -triacetat oder solche aus synthetischen Polymeren wie z. B. Polyamiden, Polyolefinen und Polysulfonen. Auch Membranen aus porösem Glas oder « dynamische » Membranen, gebildet aus Schwermetalloxiden und z. T. wasserlöslichen Polymeren wie z. B. Polyacrylsäure können verwendet werden.

Membranen der vorgenannten Art sind beispielsweise in U. F. Franck (loc. cit., S. 2) und Hwang, Kammermeyer : Membranes in Separations (Techniques of Chemistry) Vol. 7, 1975, Wiley, New York beschrieben. Die zur Anwendung kommenden Membranen halten die gelösten farbigen Nebenprodukte überwiegend, vorzugsweise vollständig zurück und lassen anorganische Salze überwiegend passieren. Solche Membranen haben eine molekulare Trenngrenze (« cut off level ») von Molekulargewicht (MG) 100-10 000. Vorzugsweise werden Membranen mit einem « cut off level » von ca. MG 300-6 000 eingesetzt. Vorzugsweise wird die Druckpermeation bei Drücken zwischen 0,5 und 60 bar durchgeführt. Der pH-Wert und die Temperatur sind für die Durchführung des Trennprozesses bezüglich der Membranen nicht kritisch, da für alle pH- und Temperaturbereiche geeignete Membranen zur Verfügung stehen. Von den Mutterlaugen werden mehr als 50 %, vorzugsweise mehr als 75 % des Ausgangsvolumens als Permeat abgezogen. Das erhaltene Konzentrat wird vorzugsweise einer Trocknung insbesondere einer thermischen Trocknung unterworfen, wobei eine gegebenenfalls notwendige Nuancierung vor oder

nach der Trocknung erfolgen kann. Das resultierende Farbstoffpulver kann dann nach bekannten Färbeverfahren auf Leder gefärbt werden.

Die erfindungsgemäße Verwendung von Stoffgemischen, die dadurch erhältlich sind, daß man die Mutterlaugen, die beim Aussalzen bei der Herstellung von wasserlöslichen oder wasserlöslich machende Gruppen enthaltenden Farbstoffen anfallen, durch ein Membrantrennverfahren aufkonzentriert und das Konzentrat trocknet, bietet ein besonders kostengünstiges Verfahren zur Herstellung von Lederfärbemitteln.

Bei der Extinktionsbestimmung der Mutterlauge wird folgendermaßen verfahren.

20 ml der Mutterlauge werden mit verdünnter Natronlauge oder verdünnter Schwefelsäure auf pH 7 gestellt und mit dest. $H_2O$ auf 100 ml aufgefüllt. Diese Lösung wird in einer Laborzentrifuge 5 min bei $U = 4\,000\ min^{-1}$ zentrifugiert. Die überstehende Lösung wird dann soweit verdünnt, daß in einem handelsüblichen Fotometer das Absorptionsspektrum gemessen werden kann. Je nach Schichtdicke der verwendeten Küvette muß noch die Extinktion im Absorptionsmaximum auf eine Schichtdicke von 10 cm bezogen werden.

## Beispiel 1

Die Herstellung des Farbstoffs, der in der Form der freien Säure der Formel

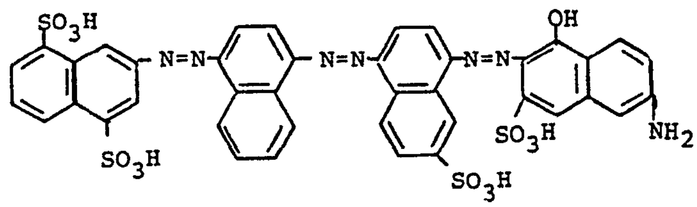

entspricht, erfolgt in üblicher Weise durch Diazotieren von 2-Amino-Naphthyl-4,8-disulfonsäure, Kuppeln auf 1-Aminonaphthalin, erneutes Diazotieren und Kuppeln auf 1-Aminonapthalin-7-sulfonsäure. Es wird erneut diazotiert und auf 6-Amino-1-naphthol-3-sulfonsäure gekuppelt. Nach dem Aussalzen des Farbstoffs mit NaCl wird filtriert.

20 $m^3$ der Mutterlauge werden mit 650 kg konz. HCl von pH 9,1 auf pH 6 gestellt. In folgender technischen Anlage wird die Mutterlauge während 56 h aufkonzentriert :

| | |
|---|---|
| Membranfläche des Moduls | 19 $m^2$ |
| Membrantrenngrenze | MG 6 000 |
| Membranmaterial | Polysulfon |
| Druck | 40 bar |
| Temperatur | 50 °C |
| Volumenstrom durch den Modul | 8,5 $m^3/h$ |

Man erhält 2,8 $m^3$ konzentrierte Mutterlauge aus der durch Verdampfen des Wassers 320 kg eines Farbstoffpulvers erzielt werden, das auf Leder gefärbt einen violetten Farbton ergibt. In den ca. 17,8 $m^3$ Permeat befinden sich nur noch 12 % der gesamten CSB-Last der ursprünglichen Mutterlauge (CSB = Chemischer Sauerstoffbedarf ; auch COD = Chemical Oxygen Demand).

## Beispiel 2

Die Herstellung des Farbstoffs, der in Form seiner freien Säure der Formel

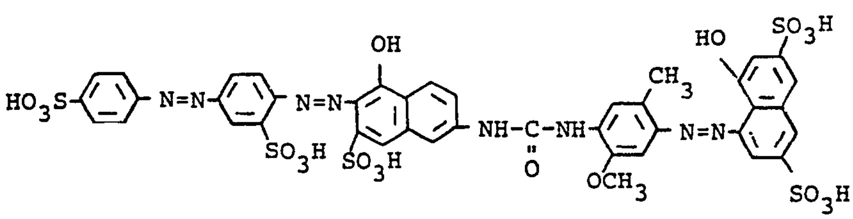

entspricht, erfolgt in üblicher Weise durch Diazotieren von 4-Aminoazobenzol-3,4'-disulfonsäure und Kuppeln auf

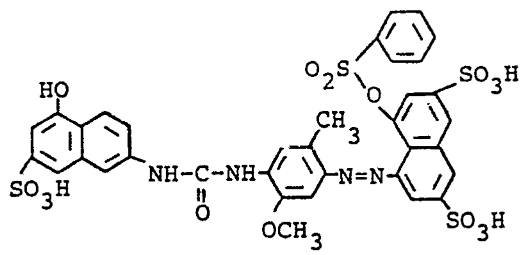

Nach der Verseifung des Sulfonsäureesters in bekannter Weise wird der Farbstoff mit NaCl ausgesalzen und durch Filtration isoliert.

10 $m^3$ der Mutterlauge des Farbstoffs werden mit 40 l konz. HCl von pH 9,3 auf pH 6 gestellt. In der gleichen Anlage und unter gleichen Bedingungen wie in Beispiel 1 beschrieben wird die Mutterlauge in 28 h aufkonzentriert. Man erhält 1 $m^3$ konzentrierte Mutterlauge aus der durch Verdampfen des Wassers 360 kg eines Farbstoffpulvers erzielt werden, das auf Leder gefärbt einen roten Farbton ergibt. In den ca. 9 $m^3$ Permeat befinden sich nur noch 32 % der gesamten CSB-Last der ursprünglichen Mutterlauge.

Beispiel 3

Der in üblicher Weise durch Diazotieren von 4-Aminoazobenzol-3,4'-disulfonsäure und Kuppeln auf m-Aminophenylharnstoff hergestellte Farbstoff der Formel

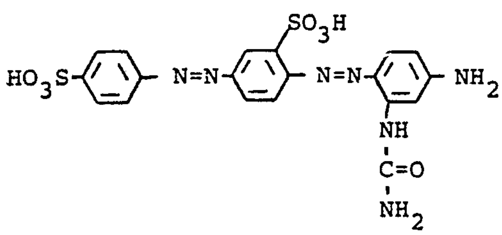

wird ausgesalzen und durch Filtration isoliert.

20 $m^3$ der Mutterlauge werden mit 550 l 40 % NaOH von pH 3,7 auf pH 6 gestellt. In der gleichen Anlage und unter gleichen Bedingungen wie in Beispiel 1, jedoch mit einer anderen Membran wird die Mutterlauge in 38 h aufkonzentriert. Die verwendete Membran besteht aus einem aromatischen Polyamidderivat und hat annähernd die gleiche Trenngrenze wie die Membran in Beispiel 1. Man erhält 2,6 $m^3$ konzentrierte Mutterlauge aus der durch Verdampfen des Wassers 300 kg eines Farbstoffpulvers erzielt werden, das auf Leder gefärbt einen roten Farbton ergibt.

Beispiel 4

Der Farbstoff, der in Form seiner freien Säure der Formel

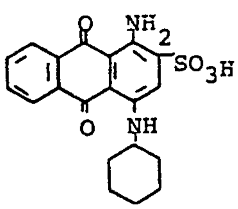

entspricht, wird in üblicher Weise durch Umsetzung von 4-Brom-1-aminoanthrachinon-2-sulfonsäure mit Cyclohexylamin hergestellt und durch Aussalzen isoliert (s. B. I. O. S. Final Report No. 1484, S. 30 und FIAT Final Report No. 1313, S. 213 f.).

20 $m^3$ der Mutterlauge des Farbstoffs werden mit ca. 90 kg konz. HCl von pH 12,5 auf pH 6 gestellt. In der gleichen Anlage wie in Beispiel 1 werden bei 30 °C, 40 bar und einem Volumenstrom durch den Modul von 8,5 $m^3/h$ mit einer Celluloseacetatmembran (Trenngrenze MG 500, $R_{NaCl}$ (= Rückhaltung für NaCl : ca. 30 %) während 54 h 17 $m^3$ Permeat abgezogen. Das Konzentrat ergibt auf Leder gefärbt einen graublauen Farbton.

**Ansprüche**

1. Lederfärbemittel, dadurch erhältlich, daß man die Mutterlaugen, die beim Aussalzen bei der Herstellung von wasserlöslichen oder wasserlöslich machende Gruppen enthaltenden organischen

Farbstoffen anfallen und deren Extinktion bei einer Schichtdicke von 10 cm im Absorptionsmaximum ≥ 500 beträgt, durch ein Membrantrennverfahren aufkonzentriert und man das Konzentrat gegebenenfalls trocknet.

2. Lederfärbemittel gemäß Anspruch 1, dadurch erhältlich, daß man die Mutterlaugen, die beim Aussalzen bei der Herstellung von Mono-, Dis- oder Polyazo, Formazan-, Anthrachinon-, Anthrapyridon-, Nitro-, Methin-, Styryl-, Azastyryl-, Naphthoperinon-, Chinophthalon- oder Phthalocyaninfarbstoffen anfallen in das Membrantrennverfahren einsetzt.

3. Lederfärbemittel gemäß Anspruch 1, dadurch erhältlich, daß man die Mutterlaugen, die beim Aussalzen von Azofarbstoffen bei der Herstellung durch Diazotierung und Kupplung und gegebenenfalls Harnstoffbildung und/oder Einführung von faserreaktiven Gruppen und/oder Metallisierung anfallen, in das Membrantrennverfahren einsetzt.

4. Lederfärbemittel gemäß den Ansprüchen 1 und 3, dadurch erhältlich, daß man in das Membrantrennverfahren Mutterlaugen einsetzt, die beim Aussalzen bei der Herstellung von Polyazofarbstoffen anfallen.

5. Lederfärbemittel gemäß Anspruch 1, dadurch erhältlich, daß man die Mutterlaugen, die beim Aussalzen bei der Herstellung von Anthrachinonfarbstoffen durch Sulfierung und/oder Einführung von faserreaktiven Gruppen anfallen, in das Membrantrennverfahren einsetzt.

6. Lederfärbemittel gemäß Anspruch 1, dadurch erhältlich, daß man die Mutterlaugen, die nach der Herstellung von metallhaltigen oder metallfreien Phthalocyaninfarbstoffen durch Sulfierung und gegebenenfalls Einführung von faserreaktiven Gruppen anfallen, in das Membrantrennverfahren einsetzt.

7. Lederfärbemittel gemäß den Ansprüchen 1-6, dadurch erhältlich, daß die Konzentrate, erhalten durch das Membrantrennverfahren, einer thermischen Trocknung unterzogen wurden.

8. Lederfärbemittel gemäß den Ansprüchen 1-7, dadurch erhältlich, daß man die Mutterlaugen der Druckpermeation unterwirft.

9. Lederfärbemittel gemäß Anspruch 8, dadurch erhältlich, daß man die Druckpermeation bei Drücken zwischen 0,5 und 60 bar ausführt.

10. Lederfärbemittel gemäß den Ansprüchen 8 und 9, dadurch erhältlich, daß bei der Druckpermeation Membranen eingesetzt werden, die eine molekulare Trenngrenze von Molekulargewicht 100-10 000 vorzugsweise 300-6 000 haben.

**Claims**

1. Leather dyeing agents, which can be obtained by concentrating, by means of a membrane separation process, the mother liquors, which are produced in the salting-out process in the preparation of organic dyestuffs which are water-soluble or which contain groups imparting watersolubility, the mother liquors having an extinction in the absorption maximum which is ≥ 500, with a layer thickness of 10 cm, and by drying the concentrate, if appropriate.

2. Leather dyeing agents according to Claim 1, which can be obtained by employing, in the membrane separation process, the mother liquors which are produced in the salting-out process in the preparation of monoazo, disazo or polyazo dyestuffs, formazan, anthraquinone, anthrapyridone, nitro, methine, styryl, azastyryl, naphthoperinone, quinophthalone or phthalocyanine dyestuffs.

3. Leather dyeing agents according to Claim 1, which can be obtained by employing, in the membrane separation process, the mother liquors which are produced in the salting-out of azo dyestuffs in the preparation by means of diazotisation and coupling and, if appropriate, urea formation and/or introduction of fibre-reactive groups and/or metallisation.

4. Leather dyeing agents according to Claims 1 and 3, which can be obtained by employing, in the membrane separation process, mother liquors which are produced in the salting-out in the preparation of polyazo dyestuffs.

5. Leather dyeing agents according to Claim 1, which can be obtained by employing, in the membrane separation process, the mother liquors which are produced in the salting-out in the preparation of anthraquinone dyestuffs by sulphonation and/or introduction of fibre-reactive groups.

6. Leather dyeing agents according to Claim 1, which can be obtained by employing, in the membrane separation process, the mother liquors which are produced after the preparation of metal-containing or metal-free phthalocyanine dyestuffs by means of sulphonation and, if appropriate, introduction of fibre-reactive groups.

7. Leather dyeing agents according to Claims 1 to 6, which can be obtained by having subjected the concentrates, obtained by means of the membrane separation process, to a thermal drying process.

8. Leather dyeing agents according to Claims 1 to 7, which can be obtained by subjecting the mother liquors to pressure permeation.

9. Leather dyeing agents according to Claim 8, which can be obtained by carrying out the pressure permeation at pressures of between 0.5 and 60 bars.

10. Leather dyeing agents according to Claims 8 and 9, which can be obtained by employing, in the pressure permeation, membranes which have a molecular cut off level of molecular weight 100 to 10,000, preferably 300-6,000.

**Revendications**

1. Colorants pour cuir obtenus en concentrant par une technique de séparation sur membrane les liqueurs mères formées au relargage à la préparation de colorants organiques hydrosolubles ou contenant des groupes hydrosolubilisants et dont l'extinction à une épaisseur de couche de 10 cm correspond à un maximum d'absorption supérieur ou égal à 500, et en séchant éventuellement le concentré.

2. Colorants pour cuir selon la revendication 1, obtenus en utilisant dans la technique de séparation sur membrane les liqueurs mères formées au relargage à la préparation de colorants mono-, dis- ou polyazoïques, de formazanes, d'anthraquinones, d'anthrapyridones, nitrés, de méthines, styryliques, azastyryliques, de naphtopérinones, de quinophtalones ou de phtalocyanines.

3. Colorants pour cuir selon la revendication 1, obtenus en utilisant dans la technique de séparation sur membrane les liqueurs mères formées au relargage de colorants azoïques à la préparation par diazotation et copulation et le cas échéant formation d'urées et/ou introduction de groupes réactifs à l'égard des fibres et/ou métallisation.

4. Colorants pour cuir selon les revendications 1 et 3, obtenus en utilisant dans la technique de séparation sur membrane des liqueurs mères formées au relargage à la préparation de colorants polyazoïques.

5. Colorants pour cuir selon la revendication 1, obtenus en utilisant dans la technique de séparation sur membrane des liqueurs mères formées au relargage à la préparation de colorants d'anthraquinones par sulfonation et/ou introduction de groupes réactifs avec des fibres.

6. Colorants pour cuir selon la revendication 1, obtenus en utilisant dans la technique de séparation sur membrane les liqueurs mères formées à la préparation de colorants de phtalocyanines métalliques ou non métalliques par sulfonation et le cas échéant introduction de groupes réactifs avec les fibres.

7. Colorants pour cuir selon les revendications 1 à 6, obtenus en soumettant à un séchage à la chaleur les concentrés eux-mêmes obtenus par la technique de séparation sur membrane.

8. Colorants pour cuir selon les revendications 1 à 7, obtenus en soumettant les liqueurs mères à une perméation sous pression.

9. Colorants pour cuir selon la revendication 8, obtenus en réalisant la perméation sous pression à des pressions de 0,5 à 60 bars.

10. Colorants pour cuir selon les revendications 8 et 9, obtenus en utilisant à la perméation sous pression des membranes qui ont une limite de séparation moléculaire de poids moléculaire 100 à 10 000, de préférence 300 à 6 000.